# EUROPEAN PATENT APPLICATION

(11) **EP 2 096 886 A1**
(43) Date of publication of application: **02.09.2009**
(21) Application number: 08152173.4
(22) Date of filing: 29.02.2008
(51) Int. Cl.: H04W 4/00

(54) **Mechanism for signaling resource allocation for communication connection**

(71) Applicant: Nokia Siemens Networks Oy, 02610 Espoo (FI)
(72) Inventor: Döttling, Martin, 85579, Neubiberg (DE); Kolding, Troels, 9270, Klarup (DK); Raaf, Bernhard, 82061, Neuried (DE)
(74) Representative: TBK-Patent

(57) **Abstract**

A mechanism for signaling a resource allocation for a communication connection. A common knowledge at the transmitter and the receiver sides regarding a subset S of M resource elements (REs) out of the total of N REs indicating scheduling candidates for being assigned to a specific user equipment (UE) is determined and used. A signaling for an allocation of REs uses then indices into the user-specific subset S instead of indices of the total N REs, thus reducing overhead.

## Description

### BACKGROUND OF THE INVENTION

### Field of the invention

The present invention relates to a mechanism for signaling a resource allocation for a communication connection. In particular, the present invention relates to a method providing an optimized resource allocation signaling in a communication network, for example, an OFDMA (Orthogonal Frequency Division Multiple Access) based cellular system, like 3GPP Long-Term Evolution (LTE) or the radio system developed within the European research project WINNER (Wireless Initiative New Radio).

For the purpose of the present invention to be described herein below, it should be noted that
- a user equipment may for example be any device by means of which a user may access a communication network; this implies mobile as well as non-mobile or fixed devices and networks, independent of the technology platform on which they are based; only as an example, it is noted that user equipments and network elements operated according to principles standardized by the 3^{rd} Generation Partnership Project 3GPP, and known for example as UMTS terminals and LTE-based network elements like an enhanced Node B (eNB), are suitable for being used in connection with the present invention;
- when reference is made herein to a call or communication connection, this exemplifies only a general example of a connection of any content; content as used in the present invention is intended to mean data of at least one of audio data (e.g. speech), video data, image data, text data, and meta data descriptive of attributes of the audio, video, image and/or text data, any combination thereof or even, alternatively or additionally, other data such as, as a further example, program code of an application program to be accessed/downloaded;
- method steps likely to be implemented as software code portions and being run using a processor at one of the entities described herein below are software code independent and can be specified using any known or future developed programming language;
- method steps and/or devices likely to be implemented as hardware components at one of the entities are hardware independent and can be implemented using any known or future developed hardware technology or any hybrids of these, such as MOS, CMOS, BiCMOS, ECL, TTL, etc, using for example ASIC components or DSP components, as an example;
- generally, any method step is suitable to be implemented as software or by hardware without changing the idea of the present invention;
- devices or means can be implemented as individual devices or means, but this does not exclude that they are implemented in a distributed fashion throughout the system, as long as the functionality of the device is preserved.

### Related prior art

In the last years, an increasing extension of communication networks, e.g. of wire based communication networks, such as the Integrated Services Digital Network (ISDN), or wireless communication networks, such as the cdma2000 (code division multiple access) system, cellular 3rd generation (3G) communication networks like the Universal Mobile Telecommunications System (UMTS), cellular 2nd generation (2G) communication networks like the Global System for Mobile communications (GSM), the General Packet Radio System (GPRS), the Enhanced Data Rates for Global Evolutions (EDGE), or other wireless communication system, such as the Wireless Local Area Network (WLAN) or WiMax, took place all over the world. Various organizations, such as the 3^{rd} Generation Partnership Project (3GPP), the International Telecommunication Union (ITU), 3^{rd} Generation Partnership Project 2 (3GPP2), Internet Engineering Task Force (IETF), the IEEE (Institute of Electrical and Electronics Engineers) and the like are working on standards for telecommunication network and access environments.

With the emergence of packet-based wireless broadband systems such as WiMAX, also other systems like the Universal Mobile Telecommunications System (UMTS) is developed further to cope with increasing performance demands. As one example, the Long Term Evolution (LTE) of the UMTS Terrestrial Radio Access and Radio Access Network is under development. Goals for the evolved system include support for improved system capacity and coverage, high peak data rates, low latency, reduced operating costs, multi-antenna support, flexible bandwidth operations and seamless integration with existing systems.

In order to achieve these goals, more sophisticated transmission mechanisms are implemented for the establishment of a communication connection. One of these transmission mechanisms is the Orthogonal Frequency-Division Multiple Access (OFDMA) which is used in a downlink direction in LTE. OFDMA is a multi-user version of Orthogonal Frequency-Division Multiplexing (OFDM) digital modulation scheme and assigns subsets of subcarriers to individual users.

A particular advantage of OFDMA-based wireless systems is that opportunistic scheduling can be done in several dimensions, such as time, frequency, and space. Thus, small portions of the overall radio resources, so-called resource elements (RE) can be individually and flexibly allocated to different users. This allows fostering significant scheduling gains, but on the other hand requires informing the peer entity (e.g. a user equipment (UE) in case of downlink) about which RE are allocated to it. Thus, adaptive resource scheduling might require relatively high amount of signalization for allocation of each possible resource to each possible mobile, in particular when taking into account the large number of mobiles and resources (time, frequency and space) in future (LTE, 4G) mobile systems.

Hence, there are two choices, namely either to accept an excessive control signaling to express which *A* resource elements (RE) out of *N* total resource elements are assigned to a particular user (or communication connection), or to reduce the flexibility of the adaptive scheduling by limiting the possible assignments. The latter would, however, also restrict the available gain due to opportunistic scheduling. As indicated above, this problem becomes especially prominent for systems with a large number of available RE, like future IMT-Advanced systems with high bandwidth and/or high spatial re-use of RE.

As an example, a straight-forward encoding of all possible allocations of *A* ∈ {1,..., *N*} RE out of *N* would require *N* bits. Using dedicated control signaling, this needs to be signaled to all scheduled users, i.e. the total information overhead could be up to *N²* bits (if each resource element is allocated to a different user). Since this control information needs to be highly reliable, strong coding is preferably to be used and high overall control overhead would be the result.

The resource allocation information problem has been mentioned in various standardization documents. For LTE, a starting point for design of the DL Control Channel Structure in LTE is provided in the 3GPP RAN1 Tdoc R1-071820 ("DL Control Channel Structure). Different approaches for reducing downlink resource allocation overhead, which can be summarized as combinatorial, bitmaps, split bandwidth bitmaps, subband ("Island"), or tree approaches, are indicated in the 3GPP RAN1 Tdoc R1-073227 ("Way Forward for DL Resource Allocation Mapping"). In these methods, overhead is reduced by limiting the number of possible allocations in different ways. However, when applying these methods, the achievable gain is also reduced which is not optimal when considering the benefits of OFDMA mentioned above. In addition, there is still provided an overhead comprising unnecessary information which is also not optimal.

### SUMMARY OF THE INVENTION

Thus, it is an aim of the invention to provide an improved mechanism for signaling a resource allocation for a communication connection and/or user which reduces the overhead, thus saving communication resources, and still allows a flexible and optimal allocation of resources.

This object is achieved by the measures defined in the attached claims.

In particular, according to one aspect of the proposed solution, there is provided, for example, a method comprising determining a subset (S) out of a total number (N) of resource elements (RE), said subset (S) indicating scheduling candidates of the resource elements selectable for a communication connection, sending an allocation message indicating an allocated set (A) of resource elements assigned to the communication connection, wherein the allocation message comprises indices into the subset (S) of scheduling candidates.

According to a further aspect of the proposed solution, there is provided, for example, an apparatus comprising a processor configured to determine a subset (S) out of a total number (N) of resource elements (RE), said subset (S) indicating scheduling candidates of the resource elements selectable for a communication connection, a transmitter configured to send an allocation message indicating an allocated set (A) of resource elements assigned to the communication connection, wherein the allocation message comprises indices into the subset (S) of scheduling candidates.

In addition, according to one aspect of the proposed solution, there is provided, for example, an apparatus comprising determining means for determining a subset (S) out of a total number (N) of resource elements (RE), said subset (S) indicating scheduling candidates of the resource elements selectable for a communication connection, sending means for sending an allocation message indicating an allocated set (A) of resource elements assigned to the communication connection, wherein the allocation message comprises indices into the subset (S) of scheduling candidates.

Still further, according to one aspect of the proposed solution, there is provided, for example, a computer program product for a computer, comprising software code portions for performing the steps of the above defined method when said product is run on the computer; the computer program product may comprise a computer-readable medium on which said software code portions are stored; also, the computer program product is directly loadable into the internal memory of the computer.

According to further refinements, the proposed solution may comprise one or more of the following features:
- the subset (S) of scheduling candidates may be determined on the basis of a report subset (R) of resource elements, wherein the report subset (R) may comprise those resource elements out of the total number (N) of resource elements for which a quality information, in particular a channel quality information (CQI), is available;
- a number (M) of resource elements of the subset (S) of scheduling candidates may be equal to or less than the total number (N) of resource elements;
- the allocation message may be generated on the basis of a number (A) of indices, wherein said number (A) of indices may be equal to or less than a number (M) of the resource elements in the subset (S) of scheduling candidates;
- the subset (S) of scheduling candidates may be reconfigured during the communication connection;
- at least one of the subset (S) of scheduling candidates and the report subset (R) may be re-configured during the communication connection;
- the subset (S) of scheduling candidates may be determined by defining that the subset (S) of scheduling candidates comprises selected resource elements, and an indication message may be sent comprising the thus defined subset (S) of scheduling candidates;
- the subset (S) of scheduling candidates may be determined by executing a hand-shake procedure with a receiver of the allocation message;
- for the hand-shake, sequence numbers comprised in at least one of the transmitted allocation message and quality information received from the receiver may be used, wherein the sequence numbers may be compared in order to identify a present subset (S) of scheduling candidates and a preceding subset (S') of scheduling candidates; also, one sequence number may be reserved for informing that the subset (S) of scheduling candidates is to be selected in a predetermined way, wherein the subset (S) of scheduling candidates to be selected may comprise one of a default set of resource elements (RE), a subset (S) of scheduling candidates previously communicated, or the total number (N) of resource elements (RE);
- alternatively, for the hand-shake, sequence numbers comprised in the transmitted allocation message may be used, wherein the sequence numbers may be incremented in response to a receipt of quality information from the receiver;
- alternatively, for the hand shake, at least one of an acknowledgement and non-acknowledgement may be sent in response to a quality information received from the receiver for indicating whether a present subset (S) of scheduling candidates or a preceding subset (S') of scheduling candidates is valid;
- the subset (S) of scheduling candidates may be determined on the basis of resource elements directly assigned to in the allocation message, wherein the subset (S) of scheduling candidates may be allowed to comprise a predetermined number (k) of different resource elements being assigned, and the subset (S) of scheduling candidates may be updated on the basis of the resource elements directly assigned and the predetermined number (k);
- it may be checked whether or not at least one of an acknowledgement and non-acknowledgement in response to the transmission of the allocation message is received, and it may be determined whether a present subset (S) of scheduling candidates or a preceding subset (S') of scheduling candidates is valid on the basis of the result of the checking;
- sequence numbers comprised in the transmitted allocation message may be used, wherein the sequence numbers may be incremented in response to a receipt of an acknowledgement for a receipt of the allocation message;
- a message comprising a report subset (R) of resource elements may be sent for triggering a quality measurement, in particular a channel quality measurement, quality measurement results for the resource elements comprised in the report subset (R) may be received, the subset (S) of scheduling candidates may be determined on the basis of the received quality measurement results, a message comprising the subset (S) of scheduling candidates thus determined may be sent, and a number (A) of resource elements contained in the subset (S) of scheduling candidates may be selected for generating the allocation message;
- alternatively, a message comprising the subset (S) of scheduling candidates for triggering a quality measurement, in particular a channel quality measurement, may be sent, quality measurement results for the resource elements comprised in the subset (S) of scheduling candidates may be received, and a number (A) of resource elements contained in the subset (S) of scheduling candidates may be selected for generating the allocation message;
- the measures may be implemented in an access subsystem network element of a communication network.

According to another aspect of the proposed solution, there is provided, for example, a method comprising determining a subset (S) out of a total number (N) of resource elements (RE), said subset (S) indicating scheduling candidates of the resource elements selectable for a communication connection, receiving an allocation message indicating an allocated set (A) of resource elements assigned to the communication connection, wherein the allocation message comprises indices into the subset (S) of scheduling candidates.

According to a further aspect of the proposed solution, there is provided, for example, an apparatus comprising a processor configured to determine a subset (S) out of a total number (N) of resource elements (RE), said subset (S) indicating scheduling candidates of the resource elements selectable for a communication connection, a receiver configured to receive an allocation message indicating an allocated set (A) of resource elements assigned to the communication connection, wherein the allocation message comprises indices into the subset (S) of scheduling candidates.

In addition, according to one aspect of the proposed solution, there is provided, for example, an apparatus comprising determining means for determining a subset (S) out of a total number (N) of resource elements (RE), said subset (S) indicating scheduling candidates of the resource elements selectable for a communication connection, receiving means for receiving an allocation message indicating an allocated set (A) of resource elements assigned to the communication connection, wherein the allocation message comprises indices into the subset (S) of scheduling candidates.

Still further, according to one aspect of the proposed solution, there is provided, for example, a computer program product for a computer, comprising software code portions for performing the steps of the above defined method when said product is run on the computer; the computer program product may comprise a computer-readable medium on which said software code portions are stored; also, the computer program product is directly loadable into the internal memory of the computer.

According to further refinements, the proposed solution may comprise one or more of the following features: Method according to claim 41, further comprising
- the subset (S) of scheduling candidates may be determined on the basis of a report subset (R) of resource elements, wherein the report subset (R) may comprise those resource elements out of the total number (N) of resource elements for which a quality information, in particular a channel quality information (CQI), is available;
- a number (M) of resource elements of the subset (S) of scheduling candidates may be equal to or less than the total number (N) of resource elements;
- the allocation message comprising a number (A) of indices may be received and processed, wherein said number (A) of indices may be equal to or less than a number (M) of the resource elements in the subset (S) of scheduling candidates;
- a result of a quality measurement, in particular a quality channel measurement, for resource elements indicated in the subset (S) of scheduling candidates may be reported upon receipt of a trigger signaling;
- the subset (S) of scheduling candidates may be reconfigured during the communication connection;
- at least one of the subset (S) of scheduling candidates and the report subset (R) may be re-configured during the communication connection;
- an indication message comprising a subset (S) of scheduling candidates comprising preselected resource elements may be received, and the subset (S) of scheduling candidates may be determined from the indication message;
- the subset (S) of scheduling candidates may be determined by executing a hand-shake procedure with a sender of the allocation message.
- for the hand-shake, sequence numbers comprised in at least one of the received allocation message and quality information transmitted to the sender may be used, wherein the sequence numbers may be compared in order to identify a present subset (S) of scheduling candidates and a preceding subset (S') of scheduling candidates; also one sequence number may be reserved for informing about a failure and requesting that the subset (S) of scheduling candidates is to be selected in a predetermined way, wherein the subset (S) of scheduling candidates to be selected may comprise one of a default set of resource elements (RE), a subset (S) of scheduling candidates previously communicated, or the total number (N) of resource elements (RE);
- alternatively, for the hand-shake, sequence numbers comprised in the received allocation message may be used, wherein in case the sequence numbers are not incremented in comparison to a preceding allocation message, a preceding subset (S') of scheduling candidates may be assumed to be valid;
- it may checking whether at least one of an acknowledgement and non-acknowledgement is received in response to a quality information transmitted to the sender for determining whether a present subset (S) of scheduling candidates or a preceding subset (S') of scheduling candidates is valid; then, the quality information may be re-transmitted or an updated quality information may be transmitted, in case a non-acknowledgement is received;
- the subset (S) of scheduling candidates may be determined on the basis of resource elements directly assigned to in the allocation message, wherein the subset (S) of scheduling candidates may be allowed to comprise a predetermined number (k) of different resource elements being assigned, and the subset (S) of scheduling candidates may be updated on the basis of the resource elements directly assigned and the predetermined number (k);
- at least one of an acknowledgement and non-acknowledgement may be sent in response to the receipt of the allocation message;
- sequence numbers comprised in the received allocation message may be used, wherein the sequence numbers may be incremented in response to an acknowledgement for a receipt of the allocation message;
- a message comprising a report subset (R) of resource elements for triggering a quality measurement, in particular a channel quality measurement, may be received, quality measurement results for the resource elements comprised in the report subset (R) may be sent, a message comprising the subset (S) of scheduling candidates may be received, the subset (S) of scheduling candidates may be determined on the basis of the received message, and the allocation message comprising a number (A) of resource elements contained in the subset (S) of scheduling candidates may be received;
- alternatively, a message comprising the subset (S) of scheduling candidates for triggering a quality measurement, in particular a channel quality measurement, may be received, quality measurement results for the resource elements comprised in the subset (S) of scheduling candidates may be sent, and the allocation message comprising a number (A) of resource elements contained in the subset (S) of scheduling candidates may be received;
- the measures may be implemented in a peer entity, in particular a user equipment, of a communication network.

By virtue of the proposed solutions, it is possible to obtain a reduced control overhead for signaling a resource allocation information, for example a downlink resource allocation map, without restricting the scheduler's flexibility. Thus, it is possible to save communication resources and/or to schedule a larger number of users for a given size of a resource allocation control message, e.g. in the downlink direction. In contrast to the known mechanism, where signaling of resource allocations which are very unlikely to be used is supported, the present mechanism takes into account relevant a priori information. In particular, it takes into account that the scheduler decision may be dominated by available channel quality information and/or that other reasons (such as terminal capabilities) might restrict the total number of possible resource allocations. Thus, the number of resources can be suitably reduced. Furthermore, a flexible adaptation of the overhead depending on certain information on the state of the user, like the users' actual link statistics, service requirements, cell load etc., can be executed. In addition, the resource allocation can be optimized by aligning the set of RE, where CQI feedback is available, with the scheduling candidate RE so that the probable decision of the scheduler can be considered. The proposed mechanism is in particular useful in connection with LTE and the network components implemented therein, like base stations and user terminals. However, it is also beneficial to use the proposed mechanism in other systems or standards, in particular in those future radio standards being based on OFDMA, such as forthcoming IMT-Advanced systems.

The above and still further objects, features and advantages of the invention will become more apparent upon referring to the description and the accompanying drawings.

### BRIEF DESCRIPTION OF THE DRAWINGS

Fig. 1 shows a block diagram of a simplified structure of a communication network in which embodiments of the present invention are applicable.
Fig. 2 shows a flow chart of a method of resource allocation signaling in a communication network according to an embodiment of the invention.
Fig. 3 shows a signaling diagram illustrating a sequence of protocol messages according to an embodiment of the invention.
Fig. 4 shows a sequence diagram illustrating how information regarding a subset of scheduling candidates is provided to a base station and a user equipment.
Fig. 5 shows a signaling diagram illustrating a situation of delays in transmission and reception.
Fig. 6 shows a diagram illustrating the reduction of overhead according to an embodiment of the invention.
Fig. 7 shows a signaling diagram for illustrating an implementation example according to an embodiment of the invention with triggering of quality measurements and transmitting of information regarding a subset of scheduling candidates.
Fig. 8 shows a signaling diagram for illustrating another implementation example according to an embodiment of the invention.

### DESCRIPTION OF PREFERRED EMBODIMENTS

In the following, examples and embodiments of the present invention are described with reference to the drawings. For illustrating the present invention, an example of an application in a system according to 3GPP specifications for LTE is described. However, it is to be noted that embodiments of the present invention are not limited to an application in such a system or environment but are also applicable in other network systems, connection types and the like, for example in networks according to other 3GPP specifications, IEEE specifications, or the like.

According to one example of the present invention, implicit information available to a receiver and a transmitter which can be abbreviated as "common knowledge", is used to reduce signalization overhead. In particular, the fact is exploited that only a subset of total available resources is really available for allocation. According to a preferred embodiment, the resources for which quality information like channel quality information (CQI) is available, are selected for this subset. Since only a subset of the total number of resources is used, a lower number of bits is required to signalize allocated resources. This can be effected by indices into a subset.

In order to achieve the above procedure, there are also proposed protocols to make sure that the transmitter and receiver, for example an eNB and UE, have a common understanding about the size and/or the content of the subset (i.e. a common knowledge)

A basic system architecture of a communication network may comprise a commonly known architecture of a wired or wireless access network subsystem. Such an architecture comprises one or more access network control units, radio access network elements or base stations, with which a terminal device as a user equipment is capable to communicate via one or more channels for transmitting several types of data. The general functions and interconnections of these elements are known to those skilled in the art and described in corresponding specifications so that a detailed description thereof is omitted herein. However, it is to be noted that there are provided several additional network elements and signaling links used for a communication connection or a call between terminals and network elements.

Furthermore, the user equipment / access network element and their functions described herein may be implemented by software, e.g. by a computer program product for a computer, or by hardware. In any case, for executing their respective functions, correspondingly used devices, such as user equipment, a network element like a base transceiver station, a Node B, and enhanced Node B (eNB), and the like comprise several means and components (partly not shown) which are required for control, processing and communication/signaling functionality. Such means may comprise, for example, a processor unit for executing instructions, programs and for processing data, memory means for storing instructions, programs and data, for serving as a work area of the processor and the like (e.g. ROM, RAM, EEPROM, and the like), input means for inputting data and instructions by software (e.g. floppy diskette, CD-ROM, EEPROM, and the like), user interface means for providing monitor and manipulation possibilities to a user (e.g. a screen, a keyboard and the like), interface means for establishing links and/or connections under the control of the processor unit (e.g. wired and wireless interface means, an antenna, etc.) and the like.

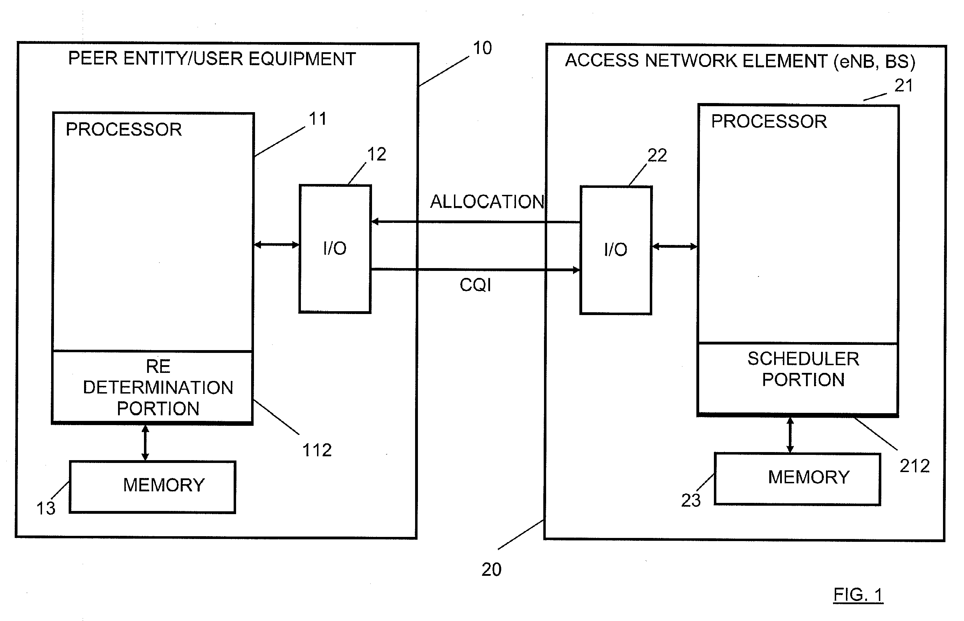

Fig. 1 shows a simplified block diagram of an architecture of a communication network to which the present invention is applicable. In Fig. 1, an example based on the 3GPP specifications for LTE is selected. However, it is to be noted that also other network systems can use the principles defined below, for example another 3GPP based network, a WLAN and the like, or network systems developed in the future and having similar basic functionalities. The respective network elements comprised by such network systems are generally known by those skilled in the art so that a detailed description thereof is omitted herein for the sake of simplicity. Furthermore, it is to be noted that the functional architecture can be designed into various hardware configurations rather than fixed configurations. Moreover, even though the following description relates to OFDMA as an example for an access mechanism, the present invention is also applicable to other types of access mechanism, such as SC-FDMA (single carrier frequency division multiple access).

Fig. 1 shows a block diagram of simplified structure of a communication network in which embodiments of the present invention are applicable. The depicted system includes a peer entity, such as a user equipment (UE) 10, and an access network element 20, such as an eNB or a BS. The components of the system in Fig. 1 cooperate to execute a resource allocation by using the above mentioned common knowledge. According to specific embodiments, the user equipment receives allocation messages indicating resource elements allocated to the user/communication connection, and sends quality information, in particular channel quality information (CQI) based on corresponding measurements, for example. On the other hand, the access network device 20 is configured to receive the CQI and to send the allocation message to the UE 10. Not shown in Fig. 1 is a further signalling used for creating the common knowledge used in the mechanism according to the invention, as described above, which will be described in the following.

According to Fig. 1, the UE 10 comprises several portions and members. It is to be noted that the structure of the UE 10 depicted in Fig. 1 is simplified in order to show those parts useful for understanding embodiments of the present invention. As known to those skilled in the art, a UE may comprise several other elements or functions not shown herein. The UE 10 may comprise a processor portion 11, such as a CPU or the like, an input/output (I/O) portion 12 representing an interface to the network and comprising, for example, transceiver elements for an air or wire interface, for example, and a memory portion 13 in which, amongst others, data can buffered. The I/O 12 is connected to the processor 11 and forwards data/signaling received from the network to the processor and forwards data/signaling received from the processor to the network (e.g. the access network element 20). The memory portion 13 is connected to the processor and stores/buffers data and programs used by the processor 11. The processor portion 11 comprises also a resource element (RE) determination portion 112 which may be used for effecting processing to obtain a subset S of scheduling candidates or a re-configuration of this subset S (to be described later).

Similar to the UE 10, the access network element 20 (referred to also as eNB or BS, hereinafter) also comprises several portions and members. It is to be noted that the structure of the access network element 20 depicted in Fig. 1 is also simplified in order to show those parts useful for understanding embodiments of the present invention. As known to those skilled in the art, a corresponding access network element may comprise several other elements or functions not shown herein. The BS 20 may comprise a processor portion 21, such as a CPU or the like, an input/output (I/O) portion 22 representing an interface to the network/the UE10 and comprising, for example, transceiver elements for an air or wire interface, for example, and a memory portion 23 in which, amongst others, data can buffered. The I/O 22 is connected to the processor 21 and forwards data/signaling received from the UE to the processor and forwards data/signaling received from the processor to the UE. The memory portion 23 is connected to the processor and stores/buffers data and programs used by the processor 21. The processor portion 21 comprises also a scheduler portion 212 which may be used for effecting scheduling of resource elements to the UE and for processing to obtain a subset S of scheduling candidates or a re-configuration of this subset S (to be described later).

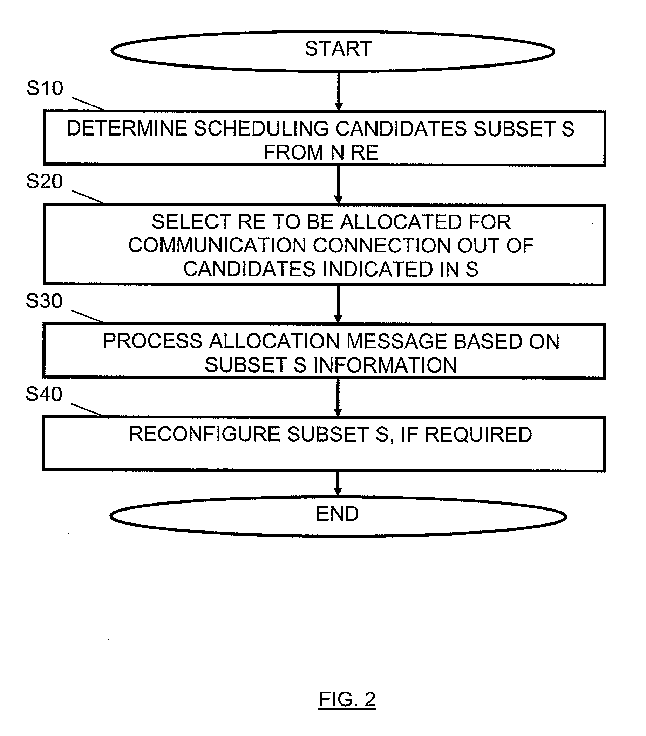

Fig. 2 shows a flow chart of a method of resource allocation signaling in a communication network according to an embodiment of the invention, which is applicable in the system depicted in Fig. 1, for example.

Basically, the invention exploits information existing in both the sending side of a resource allocation, such as an access network element like a BS or eNB, and a receiving side of the resource allocation, such as a peer entity or UE. This information is also referred to hereinafter as a common knowledge which subset **S** of *M* resource elements (REs) out of the total of *N* REs are scheduling candidates for being assigned to a specific UE. In the signaling, i.e. the actual resource allocation messaging, indices into the user-specific subset S are then used instead of indices of the total *N* REs.

As shown in Fig. 2, in a step S10, scheduling candidates of a number *M* are determined out of the number *N* of totally available RE in order to establish the subset S of scheduling candidates. It is to be noted that the determination or the initialization of the determination as well as of a re-configuration of the subset S may be effected in the access network element generating the allocation message, i.e. in the sending side element, or in the receiving side element like the UE, which will be discussed further below. Examples for the corresponding protocols and signalings are also described below.

Then, in a step S20, the sending side, i.e. a corresponding process portion like a scheduler in the access network element, selects one or more RE to be allocated to the specific UE (or the communication connection to be set-up) out of the Res indicated in the subset S of scheduling candidates and generates a corresponding allocation message wherein the selected RE, i.e. indices into the subset, are indicated.

In step S30, the receiving side, e.g. the UE, processes the information contained in the received allocation message by mapping the indices included therein to the subset S of scheduling candidates (which is known to the UE as the common knowledge) in order to retrieve the RE allocated to it.

In a step S40, a re-configuration of the subset S of scheduling candidates may be effected, if required, which may be initiated either by the receiving side (e.g. when only a limited number of RE is necessary for the communication connection or processable by the UE) or be the sending side (e.g. when more or less REs are available in comparison to the initial phase, for example).

It is to be noted that the above described order of processing may be altered in specific examples. For example, the determination of the subset S of scheduling candidates may be effected after a first (initial) set of RE is indicated to the receiving side in a first allocation message. Also additional processing parts may be effected:
for example, before the selection performed in step S20 is executed, certain measurement results may be necessary to be received at the access network element, such as quality measurements, which is used as a (further) basis of the selection.

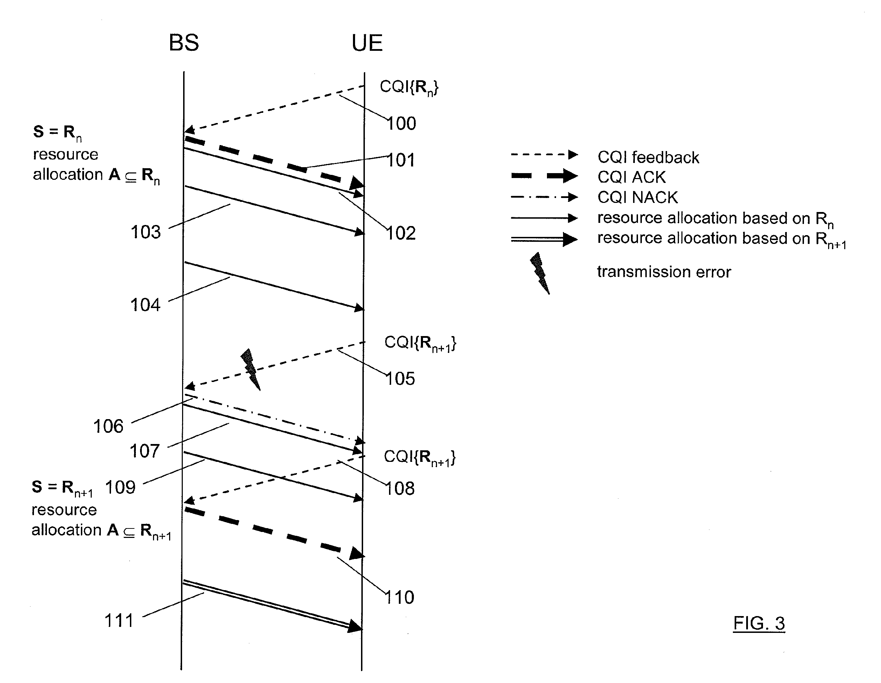

Details of the mechanism for signaling a resource allocation based on the basic principles of the invention are explained now in connection with Figs. 3 to 8.

According to one example of embodiments of the invention, the subset S of scheduling candidates may be formed out of such REs for which a quality information, such as a channel quality information (CQI), is available. For this quality information, corresponding measurements may be effected by one of the UE and the access network element, for example CQI measurements, and may be transmitted to the other element, if required, for a determination of the corresponding REs. These REs may be referred also as being part of a report subset R. The selection of RE being part of the report subset R is advantageous in such that opportunistic scheduling and proper link adaptation is in particular feasible for those REs. According to a further example of the embodiments, a one-to-one mapping between these subsets may be used, i.e. S = R.

According to a further example of the embodiments, at the set-up of a link, the subset S of scheduling candidates may be determined by defining that *M* = *N*, i.e. initially all REs are candidates to be used in future scheduling. This allows an immediate scheduling with full flexibility (e.g. without having to wait for CQI reports).

According to another example of the embodiments, the subset S of scheduling candidates at the set-up of a link may be determined by means of the access network element. For example, the BS may signal to the UE which REs are candidates for future scheduling. According to another example of the embodiments, this message may also be used to trigger quality measurements (e.g. CQI measurements) and a corresponding reporting at the respective REs.

When a link is existing, there may be different methods for triggering and reporting CQI feedback. It is to be noted that there is no limitation regarding those methods in the present invention, i.e. these methods are compatible to the proposed mechanism for signaling a resource allocation, since at any particular time for a specific UE CQI is sent for a report subset R of RE with a magnitude (i.e. a number of elements in the set) F. Even in a case where all UEs provide a feedback on all RE, i.e. F = *N*, the overhead produced by the mechanism proposed in the present invention does not generate an overhead being higher than that of a previously implemented method.

As indicated in step S40 of Fig. 2, the subset S of scheduling candidates may be reconfigured. According to a further example, not only the subset S but also the report subset R may be re-configured during a connection. This may be initiated either by the access network element or BS, which may request a different set of REs to be measured for quality, or by the UE, for example when only a reporting of a limited number of REs, e.g. the F best RE is required.

As indicated above, according to one example, it is preferable for the BS to schedule a UE at those RE where, for example, CQI information is available since CQI may be important for opportunistic scheduling and proper link adaptation. Therefore, a setting of S=R is a preferred implementation in this case, which means that a user can be scheduled exactly on the RE where a CQI feedback is reported. By means of this, it is possible to avoid explicit signaling of S from the BS to the UE.

According to a further example, in case a full-band CQI feedback is used (i.e. F = *N*), the scheduler still may encounter a situation that a particular UE will (at least for a certain time period) only be scheduled in a fraction of the overall RE, for example due to smaller processing bandwidth of the UE, to reduce the scheduling complexity, since it uses a service with a persistent resource allocation, etc. In such a case, according to this example, the subset S of scheduling candidates is selected as being a subset of the report subset R.

In the resource allocation message, not the total number of RE (i.e. *N*) is used as the basis of a compression using a suitable algorithm (for example one of the algorithms mentioned in 3GPP RAN1 Tdoc R1-071820 ("DL Control Channel Structure") or 3GPP RAN1 Tdoc R1-073227), but indices into the subset S with magnitude *M* ≤ *N*. This results in less combinatorial possibilities to assign a set A consisting of *A* out of *M* RE to a particular user. Thus a smaller payload is required. This means also that the allocation message can be coded with fewer bits and therefore requires less transmission bandwidth (for example less control channel elements (CCEs) in case of LTE).

According to an example of the embodiments, both the access network element like the BS and the UE know the size of the allocation message beforehand. Hence, the size and thus the coding (rate matching) of the message when mapped on a given number of CCEs, for example, is known as well. Therefore, even if the size of the subset S may vary with time, at any time only one size is used and therefore no additional blind detection is necessary when searching for a Control Channel Candidate for a given mobile station.

In order to ensure that both the access network element and the UE are provided with the same information about the size and/or the content of the subset S of scheduling candidates, according to one example of the embodiments, there is introduced a kind of hand-shaking algorithm to make sure base station and UE have a common understanding about the size of the subset S. It is to be noted that in case the UE has flexibility regarding the RE required and/or requested, e.g. flexibility regarding for which RE it sends a CQI feedback (for example "best F resource elements"), according to a further example of the embodiments, identifications of the respective RE (e.g. RE IDs) have to be sent to the BS by suitable signaling.

It is to be also noted that an additional handshake may still be required since a higher protection is required for the correct decoding of the resource allocation information compared to the CQI feedback.

In the following, examples for a hand-shake protocol for providing a common understanding of the subset S of scheduling candidates in the UE and the access network element are described.

In Fig. 3, a sequence of protocol messages is shown which uses acknowledgements of CQI reports in order to keep consistency of the subset S of RE that are scheduling candidates in BS and UE. In other words, the protocol for a hand-shake procedure according to this example of the embodiments is based on an acknowledgement of CQI reports transmitted between the UE and the BS.

The meaning of the differently indicated arrows is explained on the right side of Fig. 3. The indices n and n+1 indicate a report subset R before (n) and after (n+1) a re-configuration step thereof.

Thus, as shown in Fig. 3, a CQI for the report subset Rn is sent in step 100 from the UE to the BS. The BS sets the subset S of scheduling candidates to R (i.e. the scheduling candidate RE are equivalent to the RE for which a CQI is received; a corresponding setting is done (implicitly) also in the UE by sending the CQI for the selected RE of report subset R), and in step 101, the BS sends an acknowledgement of the CQI report to the UE. Thus, both the UE and the BS know the subset S (=Rn). Then, in step 103, after performing the resource allocation in the scheduler portion, the BS sends a resource allocation message with a set A to the UE for allocating RE selected from the subset S. It is to be noted that the frequency of the downlink message corresponds to that of CQI reports and not to the potentially higher rate of scheduling messages. Therefore, there may be transmitted further allocation messages (step 104) to the UE before receiving a further CQI feedback.

In step 105, a new CQI feedback is sent from the UE to the BS, which may comprise CQI for REs being different to that of the preceding CQI feedback (step 100). Thus, the subset S of scheduling candidates would be also re-configured accordingly. However, as shown in Fig. 3, it is now assumed that a transmission error occurs which prevents a correct receipt of the CQI feedback at the BS side. Hence, in step 106, the BS sends a non-acknowledgement NACK to the UE. Thus, the subset S of scheduling candidates known to the BS is not that derived by the UE from the REs contained in the actual CQI feedback. Due to the fact that the BS only knows the former subset S, it sends a new allocation message in step 107 comprising indices to the former subset S (also referred to as subset S').

On the UE side, in case of receiving an acknowledgement (ACK), the UE knows that any further scheduling will be based on the (new) subset S, i.e. the subset based on the latest CQI feedback. On the other hand, in case of a non-acknowledgement (NACK), the UE recognizes that the BS is aware only of the (former) subset S'. Thus, for processing the allocation message (e.g. step S107), the UE uses the former subset S' which may be stored for this purpose, for example, until an acknowledgment for the new subset S is received.

According to a further example, it may be configurable that in case of receiving a NACK, the UE immediately sends a re-transmission of the (present) CQI report or an even updated CQI report, as shown in step 108, in order to keep the channel information at the BS side up-to-date. In the former case combining of the messages may increase probability for successful decoding, in the latter the most recent channel information would be sent including updates since the last transmission (i.e. step 105), i.e. possibly changed CQI values and changed RE may be reported. It may be possible that in the meantime a further allocation message based on the former subset S' is sent by the BS (step 109) which will be treated like the message in step 107 by the UE.

When the BS finally receives the new CQI feedback for Rn+1 with message 108, the subset S of scheduling candidates can be adapted accordingly to the new REs indicated by the report subset Rn+1. Then in step 110, the BS sends an acknowledgement of the CQI report to the UE. Thus, both the UE and the BS know the subset S (=Rn+1). Then, in step 111, after performing the resource allocation in the scheduler portion, the BS sends a resource allocation message with a (new) set A to the UE for allocating RE selected from the subset S.

According to a further example of the embodiments, the acknowledgement of CQI reports may be a 1-bit acknowledgement. In this case, however, it would be necessary to provide a specific signaling for an indication "signaling is now based on all RE". Another alternative is to define a NACK to imply such reset in order to have fast recovery from any handshake problems.

In the following, other examples of hand-shake protocols are explained which are different to that shown in Fig. 3. According to these other examples, sequence numbers sent along with the CQI reports and/or the scheduling messages are used for providing a common knowledge of the subset S. For example, depending on the synchronity of the handshake (i.e. whether terminal and network know an exact timing relationship between transmitted allocation message and quality information received) sequence numbers may be either required in both messages or only in one of them.

According to one example for such a different hand-shake protocol, a protocol may be provided which is based on sequence numbers of a CQI report transmitted from the UE to the BS and sequence numbers of the scheduling message transmitted from the BS to the UE. This means that the CQI report may contain a sequence number and the scheduling message contain a corresponding sequence number which informs to which CQI report the particular scheduling message belongs. In case the BS now misses a CQI report, e.g. due to a transmission error, it still uses the "older" sequence number. Therefore, the UE realizes the problem and relates the scheduling message to the older set of reported RE (e.g. frequencies).

According to a further example, the length of such a sequence number may be determined by the reliability of transmission, for example by the error probability that *N*-1 sequence numbers are not understood correctly and hence the same number is used again for a new set without the peer having realized that the sequence numbers have cycled through already.

According to a further example of the embodiments, one sequence number may be reserved for indicating a special information. For example, in the uplink direction, the UE may inform the BS, for example by using this one sequence number, about an error in determining the current subset S of scheduling candidates, for example about "loss of tracking" and/or "request to base signaling on all RE", in case such a situation occurs. In the downlink direction, the BS may inform the UE, for example by using a corresponding one sequence number, about an error in determining the current subset S of scheduling candidates, and/or also that "signaling is now based on all RE". A corresponding signaling may also be executed when a probability of such an error is detected. This would allow immediately having full flexibility again in case other constraints dictate a complete re-organization of the resource assignment. This means that the BS may use this signal not only if requested by the UE, but also due to other reasons not transparent to the UE. This could also be the initial state at set-up of a link as explained above. As a further alternative example, instead of indicating that all REs are to be used, it may be also possible to indicate that the subset S of scheduling candidates is to be selected in another (special) way, e.g. by re-using a previously communicated subset S or by using a default subset different having a number of REs different to N (the default subset may be preset and stored, or negotiated between the UE and the BS by a corresponding signaling and then stored).

It is to be noted that the sequence number may allow also to further improve the reliability of other signals as it contains side information which are used by the corresponding elements according to further examples of the embodiments. For example, an uplink sequence number may contain information for CQI feedback: an identical sequence number may indicate that the same set R of RE is used for CQI reporting, wherein in this case the reported RE need not to be identified in the CQI message at all and the "best F RE" signaling format could be optimized. On the other hand, a change in the sequence number may indicate that a different set of RE shall be / is now used for CQI reporting. According to another example, the uplink sequence number may contain information for ACK/NACK messages. In case the UE responds with another (older) sequence number than sent by the BS it can be assumed that the sent downlink packets have not been successfully decoded, i.e. that associated Hybrid Automatic Repeat reQest (HARQ) feedback contains NACKs.

According to another example for a different hand-shake protocol, a protocol may be provided which is based on sequence numbers of the scheduling message transmitted from the BS to the UE. This example is similar to the previously described example which is based on sequence numbers of a CQI report transmitted from the UE to the BS and sequence numbers of the scheduling message transmitted from the BS to the UE. However, in the present example, no sequence numbers are used in the uplink directed in connection with CQI reports. Therefore, in case the sequence number of the scheduling message is not incremented after a CQI feedback is transmitted, the UE assumes that scheduling information is based on the previous subset S'.

It is to be noted that the examples of the embodiments of the invention are not dependent on a particular source coding of the resource allocation. Therefore, different signaling methods like those described, for example, in 3GPP RAN1 Tdoc R1-071820 ("DL Control Channel Structure) and 3GPP RAN1 Tdoc R1-073227 ("Way Forward for DL Resource Allocation Mapping") may be combined with the examples described above.

By means of the described examples of the embodiments of the invention, as indicated above, it is possible, for a given size of the control information message, to schedule more users, or for a fixed number of supported users, to reduce the control information overhead. In detail, in a system based on LTE, for a given number (and/or size) of control channel elements (CCEs) more users can be scheduled, or the total number of CCE can be reduced for a given number of users, which will be explained below in further detail.

In the following, a way to define a subset S of scheduling candidates from previous allocation messages according to an example of the embodiments of the invention is described.

As described above, a previously sent CQI report may be used to provide the subset S derived from CQI reports sent from the UE to the access network element (e.g. the BS or the eNB). However, according to a further example of the embodiments of the invention, there is also provided a method to define the subset S defined by the eNB, i.e. by signaling in the downlink direction rather than in the uplink direction.

For example, the subset S may be provided by using a higher layer signaling for transmitting the corresponding information.

Another example is to have two ways of signaling resources, either from the complete set or the subset S. In this case the subset S can implicitly be defined by the last resources that have been explicitly signaled. One possibility is to define the last k (i.e. a predetermined number of) different resources that have been assigned, where k can be selected suitably, for example based on an UE capacity, traffic quantity or the like. Here, the term "different resources" means that resources that are used twice or more often are only counted once.

In the following table 1, an example for this procedure is explained. For example, the following sets of allocations of resources may be assumed wherein k=4 is set. Then the subset **S** is defined as follows:

**Table 1**

| Allocation (ID of RE) | subset **S** in order of last usage, oldest first | Comment |
|---|---|---|
| 1,2 | 1,2 | |
| 2, 3 | 1, 2, 3 | 2 used twice |
| 1, 4 | 2, 3, 1, 4 | 1 used twice, shifted to back |
| 1, 5 | 3, 4, 1, 5 | Oldest value 2 dropped, 1 shifted |

As can be seen from table 1, for the allocation of REs 1, 5, the oldest value (in this case 2) is dropped from the subset S and the order of the subset S is updated. It is to be noted that the order of the subset S may be only relevant for updating the subset S. The subset S may be used also in a different order, e.g. for a selection of the actually used allocation. For that purpose, the subset S may be ordered according to the number of the RE. If known source coding schemes are applied, for example those defined in the above mentioned 3GPP RAN1 Tdoc R1-071820 ("DL Control Channel Structure) or 3GPP RAN1 Tdoc R1-073227 ("Way Forward for DL Resource Allocation Mapping"), then a further advantageous option is to use the natural order, because it may be the case that adjacent REs will be scheduled at the same time because they may exhibit similar performance (according to some implementation examples, the channel conditions typically don't change dramatically from one RE to an adjacent one).

However, according to one example, it is possible to use the described order also for the allocation. This measure is advantageous in that only one order needs to be maintained and no reordering is necessary.

Furthermore, it is to be noted that in case two ore more resources are assigned, it may be necessary to establish a rule in which order these two or more resources are to be taken into the subset S. Here, according to one example of the embodiments, the order is defined according to the number of the RE (i.e. the ID number), as shown in table 1. However, according to a further example, it is also possible to use the order in which the RE are signaled. This provides a great flexibility in the resulting order of the subset S; for example, a resource that is expected to be used again more likely may be placed so that it is at the "newest" position. This ensures that this particular resource will remain in the subset S as long as possible.

Next, examples of procedures for updating the subset S as well as examples for a usage thereof are described.

According to examples of the embodiments of the invention, there are different possibilities how to organize an update procedure and the use of the subset S and the definition of the used resources.

According to one example for such a possibility, there is established a convention that each resource that is signaled from the full set of resources (i.e. N) is implicitly also used for the resource allocation. Then the subset S should only be updated after the resources are selected. This means that only afterwards the oldest elements are removed and the actually used resources are included. This example offers the advantage that it is possible to still use the oldest elements that would otherwise be displaced by the explicitly signaled elements, if the order of update and use of the subset S was done in the other order.

According to another example for such a possibility, there is established a convention that each resource that is signaled from the full set of resources is not implicitly also used for the resource allocation. Instead, the subset S is updated to include these explicitly signaled resources. However, this means also that the oldest ones of the subset S are deleted. Then, the resources are selected from the subset S, and then the subset S is reordered to bring the just used resources into the "newest" positions. According to this example, the resources which are signaled from the full set of resources but which are not used should still be in positions indicating a "newer" resource than the resources that already had been included in the subset S but are not selected by this current allocation. This example offers the advantage that it is possible to insert new resources into the subset S without having to use them at the same time. This may be beneficial if some resources are known to become better and better wherein in this case they can be gradually feed into the subset S to make sure they are available, once they are needed. This may be beneficial if only a limited number of resources can be signaled explicitly in a single allocation, for example because of a limited signaling bandwidth or the like. Then it is possible to use several allocations in order to include a larger number of resources into the subset S so as to make them available for a later use.

In the following, examples according to embodiments of the invention explaining a use of sequence numbers in the determination of the subset S of scheduling candidates are described

As indicated above, it is essential for the mechanism for signaling a resource allocation that there is a common understanding about which resources belong to the subset S and accordingly which resources have been assigned. According to certain examples of the embodiments of the invention, if a resource allocation is lost due to transmission errors, then there may also be a misunderstanding for the next allocation.

Therefore the access network element like the eNB has to know which previous resource allocations have been received by the UE. For this purpose, according to one example of the embodiments of the invention, a protocol is introduced wherein an acknowledgement of the receipt of the allocation by the UE is used.

According to one example, the acknowledgement may be explicitly provided by means of corresponding signaling. Alternatively, as another example, the acknowledgement may be done implicitly, for example by making use of already existing signaling. For example, if the UE understands an allocation message, it will either respond with an ACK or NACK to acknowledge receipt of data, such as content data of the communication connection. This implicitly acknowledges also the receipt of the allocation signaling so that the access network element recognizes that the allocation message has been received as well. Otherwise, in case neither ACK nor NACK is sent from the UE and received from the access network element, this implicitly indicates that the allocation message was also not received.

According to a further example of the embodiments, the communication system may be designed such that an error probability regarding a misinterpretation of a receipt of either DTX (Discontinuous Transmission) or NACK as an ACK is quite low (because this would also have some severe negative effect on the system performance (e.g. data are missed)). Thus, according to this further example, it is possible to only regard the ACK for data also as an implicit ACK for the allocation signaling, while a NACK for data is not interpreted in this way (because it could actually also be a DTX, which would not acknowledge the allocation signaling). In this case, suitable countermeasures are performed by the access network element, such as a re-transmission or the usage of a (stored) subset S used for an allocation message for which an ACK has been received.

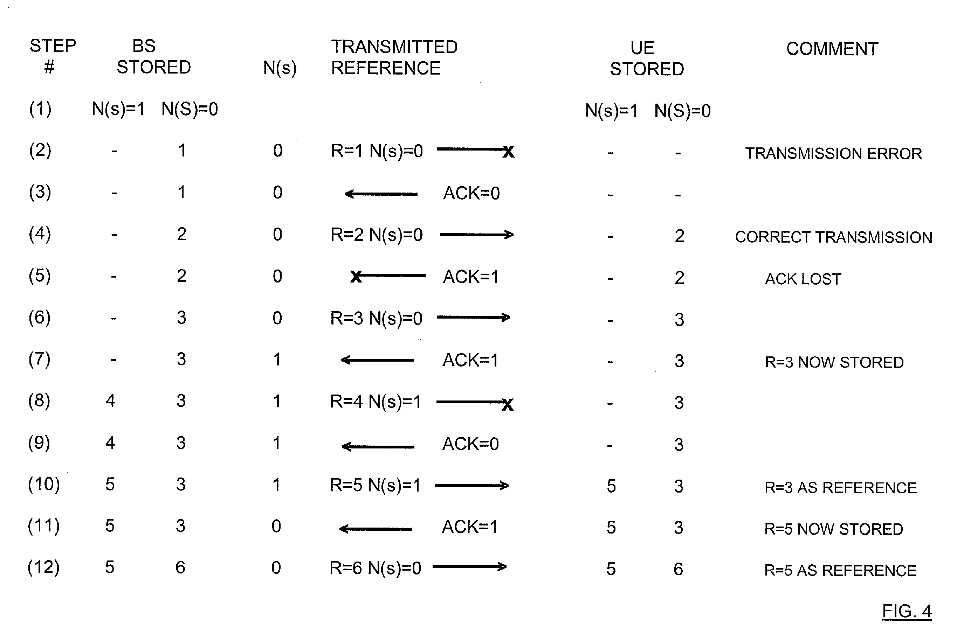

According to one example of the embodiments of the invention a protocol is designed, that uses a sequence number for the allocation signalling and an acknowledgement. Fig. 4 shows a sequence diagram illustrating how information regarding a subset of scheduling candidates is provided to a base station and a user equipment.

According to this example, one feature is that the access network element, such as the BS, does only increment a sequence number if an acknowledgement for the preceding allocation signalling is received. Only in such a case the BS stores the corresponding subset S for a later use. On the other hand, the UE stores the corresponding subset S from the last received allocation signalling for each value of the sequence number. When an allocation is received, the UE uses the stored subset S related to the preceding sequence number.

According to a further example of the embodiments of the present invention, it has been found out that in connection with the protocol outlined above that it is sufficient to use merely a single bit for the sequence number, i.e. only two values. In all cases, both the UE and the BS use the same reference irrespective of whether an allocation or an ACK is lost or even several ACKs or several allocations are lost.

The above described examples are also illustrated in Fig. 4. In Fig. 4, several steps (1) to (12) for indicating a sequence of allocation and acknowledgement signaling are depicted. "R" denotes a number of the currently transmitted reference allocation (the number does not have to be transmitted explicitly it is used only as a reference in this example), "N(s)" denotes a sequence number of the report, for example a short sequence number comprising one bit. This sequence number is actually transmitted. The columns under the term "stored" denote the reference that is stored in the BS and UE, respectively, for N(s)=0 and N(s)=1, respectively, as indicated in a first line denoted by (1), which may be regarded as some sort of initialization. Regarding the contents of these columns, an indication of "-" refers to a situation where a corresponding storage place is clear.. In the column under the term "transmitted reference", a line showing ---X means a transmission error, and a line showing an arrow -----> means a correct transmission.

In a line (referred to hereinafter also as step) (2), the BS sends an allocation (reference R=1) with sequence number N(s)=0 to the UE wherein a transmission error occurs. The UE sends in step (3) a message that it does not acknowledge the receipt of the allocation (ACK=0, which may also be a NAK). Alternatively, none acknowledgement message is sent at all.

In step (4), the BS sends an allocation (reference R=2) with sequence number N(s)=0 to the UE. Since no acknowledgement is received in response to the transmission of the preceding allocation (step (3)), the sequence number is not incremented. As shown in Fig. 4, step (4) is assumed to be correctly received at the UE. Therefore, the UE stores the allocation R=2 and sends in step (5) an acknowledgment (ACK=1) to the BS. In case this acknowledgment is lost and thus not received at the BS, it assumes again that the allocation with reference R=2 has not been received so that the sequence number is not increased.

Thus, in step (6), the BS sends an allocation (reference R=3) with sequence number N(s)=0 to the UE. Also step (6) is assumed to be correctly received at the UE. Therefore, the UE stores the allocation R=3 and sends in step (7) an acknowledgment (ACK=1) to the BS. This acknowledgment is now received by the BS. Therefore, it increments or changes the sequence number to the next number N(s)=1.

When the next allocation is sent in step (8), also the changed sequence number (N(s)=1) is used. As a consequence the allocation R=3 that was stored by the BS in step (6) is not overwritten by the allocation R=4 because the latter is stored in the storage for N(s)=1, indicated by the column headed N(s)=1. In step (8), the BS sends an allocation (reference R=4) with sequence number N(s)=1 to the UE wherein a transmission error occurs. The UE sends in step (3) a message that it does not acknowledge the receipt of the allocation (ACK=0).

In step (9), the BS sends an allocation (reference R=5) with sequence number N(s)=1 to the UE (since no acknowledgement has been received in response to the transmission of the preceding allocation (step (8)), the sequence number is not changed). Step (9) is assumed to be correctly received at the UE. Therefore, the UE uses the stored R=3 as reference, stores the allocation R=5, and sends in step (11) an acknowledgment (ACK=1) to the BS. The BS increments or changes the sequence number to the next number N(s)=0, and when the next allocation is sent in step (12), also the changed sequence number (N(s)=0) is used. In step (12), the BS sends an allocation (reference R=6) with sequence number N(s)=0 to the UE.

By means of the protocol depicted in Fig. 4, it is ensured that both the BS and the UE have a common mutual understanding which previously transmitted allocation is to be used as a basis to form the subset S of scheduling candidates, even if some of the transmitted allocations or acknowledgments have been lost. It is to be noted that the start of the connection may represent an exception for this. Thus, according to examples of the embodiments of the invention, a standard or preset subset S may be used at the start of the connection, for example, every other RB (resource block), or every n^{th} (for example, n=4) or other repetition, or the lower half or upper half etc. may be used.

Alternatively according to another example, an initial reference allocation may be provided via a higher layer signaling or may be inherited from the previous connection, i.e. the subset S for both values of the sequence number from the previous connection is stored and reused for a subsequent connection. Because the above described example of the protocol ensures that there is a mutual understanding about which previous reference allocation is to be used, this previous allocation may be used to code the allocation for the current allocation.

It is to be noted that the above described protocol is different to, for example, well known Layer 2 protocols for acknowledgement transmission. In acknowledge mode, the same information is repeated (with the same sequence number) until it is acknowledged (or eventually dropped). If this principle would be applied for a resource allocation signalling as described above, this would result in a repetition of the initial allocation until it is acknowledged. However, this would result in a problem that if the channel conditions change the previous allocation may not be suitable anymore. In the above described example of the protocol implementable for the invention, therefore always the most up-to-date allocation is transmitted, without incrementing the sequence number; the sequence number is only incremented if an ACK is received. In this way always the most up-to-date information can be exchanged. Furthermore, according to an example of the embodiments, the sequence number is not incremented regularly, as described in connection with Fig. 4. Such a regular increment would make it necessary to extend the range of the sequence number, e.g. from one bit to 4 bits, to make it still unambiguous. According to the example presented above, an unambiguous sequence number is achievable by using only a single bit sequence number.

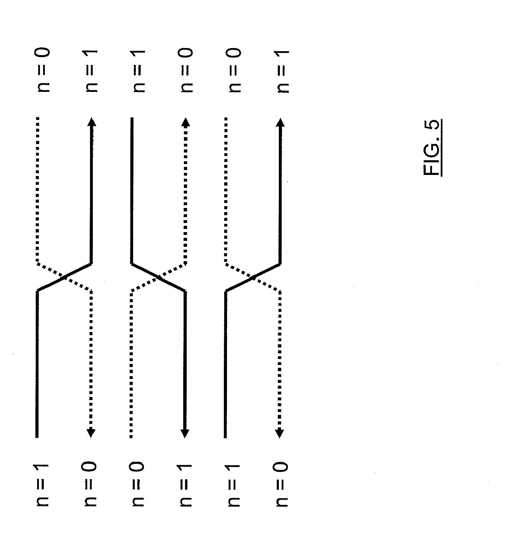

In the example of the embodiments for the protocol described above, it is assumed that the acknowledgement for the previous allocation is received immediately before transmitting a next allocation. However, due to delays with transmission and reception, including processing delay, propagation delay, interleaving etc., this may not be the case. Thus, for considering a corresponding delay, according to a further example of the embodiments of the invention, a procedure may be implemented which is similar to the above described protocol and uses additionally a procedure similar to the so called n-channel stop and wait (SAW) protocol, which is shown in Fig. 5. According to this example, several instances of the protocol are run concurrently, and for each one the ACK now comes in time. As an illustration of this procedure, Fig. 5 shows an example comprising 2 channels, indicated with n=0 and n=1, i.e. a 2-channel SAW protocol. As can be easily understood, this principle can be extended to larger numbers of nested SAW protocols as well. The arrows that cross each other indicate the delay in the information exchange. The first allocation is transmitted from left to right and the corresponding acknowledgement which is transmitted from right to left is not available already for the transmission of the second allocation, but only for the third one, and so on.

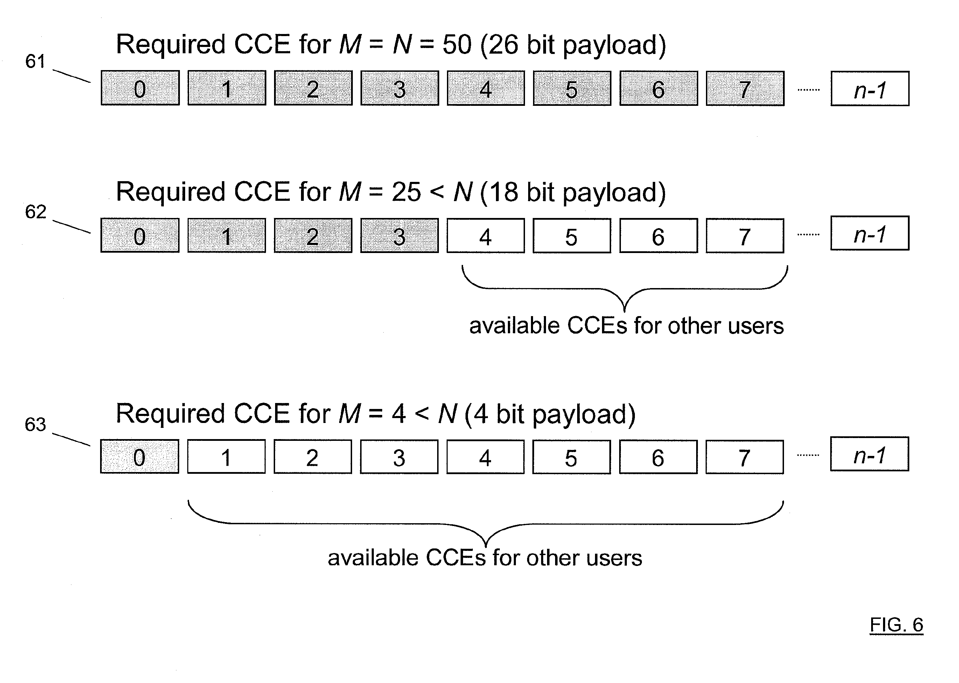

Next, implementation examples of examples of embodiments of the invention are described in further detail with reference to Figs. 6 to 8.

According to one implementation example, it is assumed that at the set-up of a connection, a BS which may operate a 10 MHz OFDM system with *N* = 50 RE signals to the UE that it will be assigned only resources 1-25 (which may mean *M* = *F* = 25), i.e. a 5 MHz sub-band. This may be based, for example, either on a respective UE capability or the required data rate for the connection to be established, or caused by the need to reduce complexity of scheduling decisions. As an alternative example, it may be also the case that the UE is limited in processing power, i.e. can only process *M* = *F* = 25 RE, but these resources may be spread over the whole spectrum to maximize frequency diversity, i.e. it receives only resources 1, 3, 5, ..., 50, for example.

When using a resource allocation mapping procedure, for example a combinatorial resource allocation mapping (as described, for example, in 3GPP RAN1 Tdoc R1-072997, "Signalling and decoding of PRB allocations LTE downlink") the payload of the resource allocation map is 18 bits (whereas for the total 50 RE it would be 26 bits).

Based on a currently available link quality, this payload of 18 bits may be encoded into four CCE. It is to be noted that a full resource allocation map for 50 RE would require an aggregation of eight CCEs. Thus, for a given number of CCE, twice as much UE can be scheduled, or the overhead due to the downlink control channel can be reduced by 50% for a given number of UEs that can be scheduled.

During the session, the UE may start to maintain only a single low-rate link (requiring for example around 2 RE on average). Furthermore, it may also be that the best reported RE remain relatively constant, for example since the UE is (presently) stationary used. Hence, the scheduler of the access network element may trigger that the UE shall only report the best *F* = 4 RE and that the resource allocation map will be reduced to *M* = *F* = 4. It is to be noted that for any given number *M* the UE may know the source decoding rule (as outlined, for example, in R1-072997 for the example of a combinatorial approach).

Any possible allocation for 4 RE can be signaled in 4 payload bits, therefore one CCE is now sufficient and the overhead may be further reduced to 12.5% compared to state-of-the art signaling. The result of the implementation described above is also depicted in Fig. 6 where the channel control elements (CCE) required for signaling an assignment of *A* resource elements (RE) out of *M* = *N* = 50 RE for a given link quality (dark boxes, upper plot designated with reference sign 61), to those required if indices into a subset of *M* = 25 RE (middle plot, designated with reference sign 62), and *M* = 4 RE is used (lower plot, designated with reference sign 63) are compared. As can be seen from this Fig. 6, there are achieved significant savings in control overhead using user-specific subsets of scheduling candidate RE according to the examples of embodiments of the invention.

As described above, one particular implementation considers a setting that the subset S of scheduling candidates is equivalent to the report subset R, i.e. S = R. This means that the REs where scheduling is possible are identical to those RE where a CQI feedback is sent from the UE.

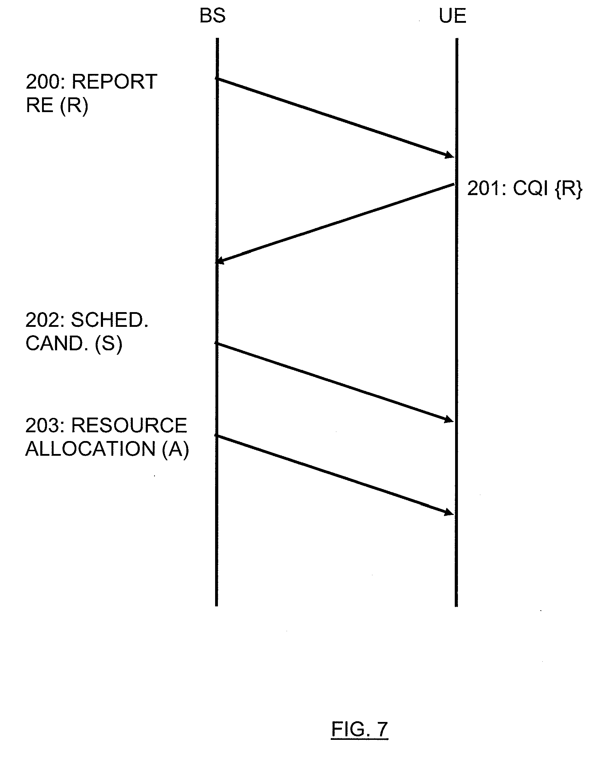

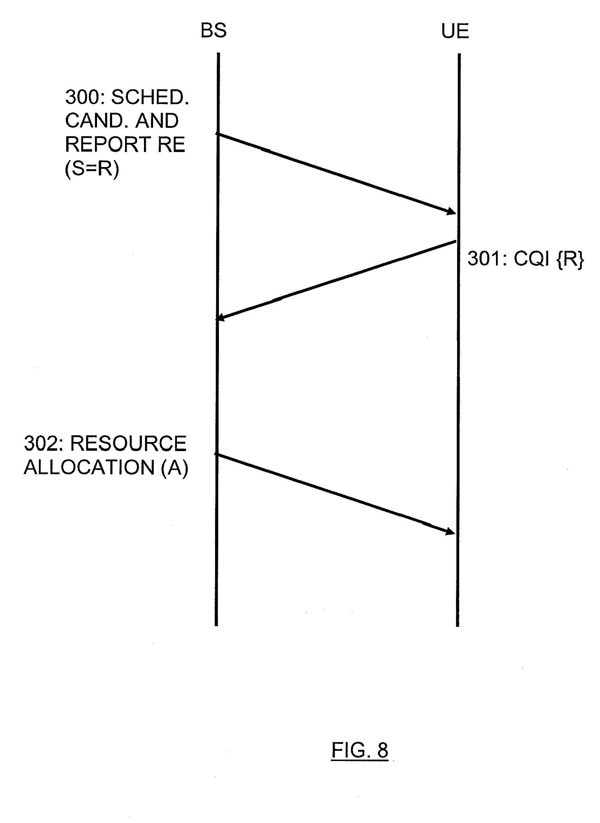

In Figs. 7 and 8, two alternative examples for a signaling flow for determining the subset S of scheduling candidates and the usage thereof in connection with an allocation message indicating a set A of allocated resources are shown.

Fig. 7 shows an example where the report subset R and the subset S of scheduling candidates are transmitted individually from the access network element (BS) to the UE. Hence, according to Fig. 7, an example of a case is shown where triggering of measurements of CQI on specific RE (indicated in a report subset R of RE) is effected in message 200 by the BS. The UE sends the CQI report related to the RE in the received subset R to the BS (message 201). Then, the BS informs the UE about the subset S of scheduling candidates of RE (message 202). Thereafter, the actual resource allocation A of a particular UE, which is comprised in the subset S, is transmitted to the UE (message 203).

Fig. 8 shows another example where the report subset R and the subset S of scheduling candidates are equivalent from the very beginning and thus transmitted to be UE with one message 300. In other words, the report subset R of RE where CQI is reported (in message 301) and the subset S of scheduling candidates of RE are identical. The actual resource allocation A of a particular UE, which is comprised in the subset S, is transmitted to the UE (message 302). This example of Fig. 8 offers the advantage that one signaling of a subset can be omitted (in comparison to Fig. 7).

It is to be noted that there may be one additional timing issue in the example described above. For example, in case the report subset R is immediately used as the subset S in the UE when it is received by the UE, then it may be necessary that scheduling is to be based on this new set S even before the corresponding CQI report (301) arrives at the BS and can be taken into account. As an alternative solution, therefore, a procedure may be executed where the report subset R is not immediately taken also for the subset S for scheduling, but only with an appropriate delay. The delay may take into account that it takes some time until CQI information is available at the BS and can be used for scheduling. This delay may be pre-known at both sides, wherein then both sides switch to the new subset S at the predetermined time. As an alternative example, an information indicating the delay may be signaled from the BS to the UE. The latter alternative example provides a further advantage if the delay includes some delay components that are specific to the BS, e.g. delay for scheduling or the BS may decide not to base scheduling decisions on the very first CQI message only but do some averaging or interpolation using more CQI messages.

As described above, the present invention provides a mechanism for signaling a resource allocation for a communication connection. A common knowledge at the transmitter and the receiver sides regarding a subset S of M resource elements (REs) out of the total of N REs indicating scheduling candidates for being assigned to a specific user equipment (UE) is determined and used. A signaling for an allocation of REs uses then indices into the user-specific subset S instead of indices of the total N REs, thus reducing overhead.

It should be understood that the above description and accompanying figures are merely intended to illustrate the present invention by way of example only. The preferred embodiments of the present invention may thus vary within the scope of the attached claims.

## Claims

1. Method comprising:
determining a subset (S) out of a total number (N) of resource elements (RE), said subset (S) indicating scheduling candidates of the resource elements selectable for a communication connection,
sending an allocation message indicating an allocated set (A) of resource elements assigned to the communication connection,
wherein the allocation message comprises indices into the subset (S) of scheduling candidates.

2. Method according to claim 1, further comprising determining the subset (S) of scheduling candidates on the basis of a report subset (R) of resource elements,
wherein the report subset (R) comprises those resource elements out of the total number (N) of resource elements for which a quality information, in particular a channel quality information (CQI), is available.

3. Method according to claim 1 or 2, wherein a number (M) of resource elements of the subset (S) of scheduling candidates is equal to or less than the total number (N) of resource elements.

4. Method according to any of the preceding claims, further comprising generating the allocation message on the basis of a number (A) of indices, wherein said number (A) of indices is equal to or less than a number (M) of the resource elements in the subset (S) of scheduling candidates.

5. Method according to any of the preceding claims, further comprising re-configuring the subset (S) of scheduling candidates during the communication connection.

6. Method according to claim 2, further comprising re-configuring at least one of the subset (S) of scheduling candidates and the report subset (R) during the communication connection.

7. Method according to any of the preceding claims, further comprising determining the subset (S) of scheduling candidates by defining that the subset (S) of scheduling candidates comprises selected resource elements, sending an indication message comprising the thus defined subset (S) of scheduling candidates.

8. Method according to any of claims 1 to 6, further comprising determining the subset (S) of scheduling candidates by executing a hand-shake procedure with a receiver of the allocation message.

9. Method according to claim 8, further comprising using sequence numbers comprised in at least one of the transmitted allocation message and quality information received from the receiver, wherein the sequence numbers are compared in order to identify a present subset (S) of scheduling candidates and a preceding subset (S') of scheduling candidates.

10. Method according to claim 9, further comprising reserving one sequence number for informing that the subset (S) of scheduling candidates is to be selected in a predetermined way, wherein the subset (S) of scheduling candidates to be selected comprises one of a default set of resource elements (RE), a subset (S) of scheduling candidates previously communicated, or the total number (N) of resource elements (RE).

11. Method according to claim 8, further comprising using sequence numbers comprised in the transmitted allocation message, wherein the sequence numbers are incremented in response to a receipt of quality information from the receiver.

12. Method according to claim 8, further comprising sending at least one of an acknowledgement and non-acknowledgement in response to a quality information received from the receiver for indicating whether a present subset (S) of scheduling candidates or a preceding subset (S') of scheduling candidates is valid.

13. Method according to any of the preceding claims, further comprising determining the subset (S) of scheduling candidates on the basis of resource elements directly assigned to in the allocation message, wherein the subset (S) of scheduling candidates is allowed to comprise a predetermined number (k) of different resource elements being assigned, and updating the subset (S) of scheduling candidates on the basis of the resource elements directly assigned and the predetermined number (k).

14. Method according to any of the preceding claims, further comprising checking whether or not at least one of an acknowledgement and non-acknowledgement in response to the transmission of the allocation message is received, determining whether a present subset (S) of scheduling candidates or a preceding subset (S') of scheduling candidates is valid on the basis of the result of the checking.

15. Method according to claim 8, further comprising using sequence numbers comprised in the transmitted allocation message, wherein the sequence numbers are incremented in response to a receipt of an acknowledgement for a receipt of the allocation message.

16. Method according to any of the preceding claims, further comprising sending a message comprising a report subset (R) of resource elements for triggering a quality measurement, in particular a channel quality measurement, receiving quality measurement results for the resource elements comprised in the report subset (R), determining the subset (S) of scheduling candidates on the basis of the received quality measurement results, sending a message comprising the subset (S) of scheduling candidates thus determined, selecting a number (A) of resource elements contained in the subset (S) of scheduling candidates for generating the allocation message.

17. Method according to any of claims 1 to 15, further comprising sending a message comprising the subset (S) of scheduling candidates for triggering a quality measurement, in particular a channel quality measurement, receiving quality measurement results for the resource elements comprised in the subset (S) of scheduling candidates, selecting a number (A) of resource elements contained in the subset (S) of scheduling candidates for generating the allocation message.

18. Method according to any of the preceding claims,
wherein the method is implemented in an access subsystem network element of a communication network.

19. Apparatus comprising:
a processor configured to determine a subset (S) out of a total number (N) of resource elements (RE), said subset (S) indicating scheduling candidates of the resource elements selectable for a communication connection,
a transmitter configured to send an allocation message indicating an allocated set (A) of resource elements assigned to the communication connection,
wherein the allocation message comprises indices into the subset (S) of scheduling candidates.

20. Apparatus according to claim 19, further comprising a receiver configured to receive quality information linked to resource elements,
wherein the processor is further configured to determine the subset (S) of scheduling candidates on the basis of a report subset (R) of resource elements, wherein the report subset (R) comprises those resource elements out of the total number (N) of resource elements for which a quality information, in particular a channel quality information (CQI), is available.

21. Apparatus according to claim 19 or 20, wherein a number (M) of resource elements of the subset (S) of scheduling candidates is equal to or less than the total number (N) of resource elements.

22. Apparatus according to any of claims 19 to 21, further comprising a generator configured to generate the allocation message on the basis of a number (A) of indices, wherein said number (A) of indices is equal to or less than a number (M) of the resource elements in the subset (S) of scheduling candidates.

23. Apparatus according to any of claims 19 to 22, wherein the processor is further configured to execute a re-configuration of the subset (S) of scheduling candidates during the communication connection.

24. Apparatus according to claim 20, wherein the processor is further configured to execute a re-configuration of at least one of the subset (S) of scheduling candidates and the report subset (R) during the communication connection.

25. Apparatus according to any of claims 19 to 24, wherein the processor is further configured to determine the subset (S) of scheduling candidates by defining that the subset (S) of scheduling candidates comprises selected resource elements, further comprising a transmitter configured to send an indication message comprising the thus defined subset (S) of scheduling candidates.

26. Apparatus according to any of claims 19 to 24, wherein the processor is further configured to determine the subset (S) of scheduling candidates by executing a hand-shake procedure with a receiver of the allocation message.

27. Apparatus according to claim 26, wherein the processor is further configured to use sequence numbers comprised in at least one of the transmitted allocation message and quality information received from the receiver, wherein the sequence numbers are compared in order to identify a present subset (S) of scheduling candidates and a preceding subset (S') of scheduling candidates.

28. Apparatus according to claim 27, wherein the processor is further configured to reserve one sequence number for informing that the subset (S) of scheduling candidates is to be selected in a predetermined way, wherein the subset (S) of scheduling candidates to be selected comprises one of a default set of resource elements (RE), a subset (S) of scheduling candidates previously communicated, or the total number (N) of resource elements (RE).

29. Apparatus according to claim 26, wherein the processor is further configured to use sequence numbers comprised in the transmitted allocation message, wherein the sequence numbers are incremented in response to a receipt of quality information from the receiver.

30. Apparatus according to claim 26, further comprising a transmitter configured to send at least one of an acknowledgement and non-acknowledgement in response to a quality information received from the receiver for indicating whether a present subset (S) of scheduling candidates or a preceding subset (S') of scheduling candidates is valid.

31. Apparatus according to any of claims 19 to 30, wherein the processor is further configured to determine the subset (S) of scheduling candidates on the basis of resource elements directly assigned to in the allocation message, wherein the subset (S) of scheduling candidates is allowed to comprise a predetermined number (k) of different resource elements being assigned, and to update the subset (S) of scheduling candidates on the basis of the resource elements directly assigned and the predetermined number (k).

32. Apparatus according to any of claims 19 to 31, wherein the processor is further configured to check whether or not at least one of an acknowledgement and non-acknowledgement in response to the transmission of the allocation message is received, and to determine whether a present subset (S) of scheduling candidates or a preceding subset (S') of scheduling candidates is valid on the basis of the result of the checking.

33. Apparatus according to claim 26, further comprising a receiver configured to receive an acknowledgement for a receipt of the allocation message, wherein the processor is further configured to use sequence numbers comprised in the transmitted allocation message, wherein the sequence numbers are incremented in response to a receipt of the acknowledgement for a receipt of the allocation message.

34. Apparatus according to any of claims 19 to 33, further comprising a transmitter configured to send a message comprising a report subset (R) of resource elements for triggering a quality measurement, in particular a channel quality measurement, a receiver configured to receive quality measurement results for the resource elements comprised in the report subset (R),
wherein the processor is further configured to determine the subset (S) of scheduling candidates on the basis of the received quality measurement results, a transmitter configured to send a message comprising the subset (S) of scheduling candidates thus determined,
wherein the processor is further configured to select a number (A) of resource elements contained in the subset (S) of scheduling candidates for generating the allocation message.

35. Apparatus according to any of claims 19 to 33, further comprising transmitter configured to send a message comprising the subset (S) of scheduling candidates for triggering a quality measurement, in particular a channel quality measurement, a receiver configured to receive quality measurement results for the resource elements comprised in the subset (S) of scheduling candidates,
wherein the processor is further configured to select a number (A) of resource elements contained in the subset (S) of scheduling candidates for generating the allocation message.

36. Apparatus according to any of claims 19 to 35, wherein the apparatus is comprised in an access subsystem network element of a communication network.

37. A computer program product for a computer, comprising software code portions for performing the steps of any of claims 1 to 18 when said product is run on the computer.

38. A computer program product according to claim 37, wherein said computer program product comprises a computer-readable medium on which said software code portions are stored.

39. A computer program product according to claim 37, wherein said computer program product is directly loadable into the internal memory of the computer.

40. Apparatus comprising:
determining means for determining a subset (S) out of a total number (N) of resource elements (RE), said subset (S) indicating scheduling candidates of the resource elements selectable for a communication connection,
sending means for sending an allocation message indicating an allocated set (A) of resource elements assigned to the communication connection,
wherein the allocation message comprises indices into the subset (S) of scheduling candidates.

41. Method comprising:
determining a subset (S) out of a total number (N) of resource elements (RE), said subset (S) indicating scheduling candidates of the resource elements selectable for a communication connection,
receiving an allocation message indicating an allocated set (A) of resource elements assigned to the communication connection,
wherein the allocation message comprises indices into the subset (S) of scheduling candidates.

42. Method according to claim 41, further comprising determining the subset (S) of scheduling candidates on the basis of a report subset (R) of resource elements, wherein the report subset (R) comprises those resource elements out of the total number (N) of resource elements for which a quality information, in particular a channel quality information (CQI), is available.

43. Method according to claim 41 or 42, wherein a number (M) of resource elements of the subset (S) of scheduling candidates is equal to or less than the total number (N) of resource elements.

44. Method according to any of claims 41 to 43, further comprising receiving and processing the allocation message comprising a number (A) of indices, wherein said number (A) of indices is equal to or less than a number (M) of the resource elements in the subset (S) of scheduling candidates.

45. Method according to any of claims 41 to 44, further comprising reporting a result of a quality measurement, in particular a quality channel measurement, for resource elements indicated in the subset (S) of scheduling candidates upon receipt of a trigger signaling.

46. Method according to any of claims 41 to 45, further comprising re-configuring the subset (S) of scheduling candidates during the communication connection.

47. Method according to claim 42, further comprising re-configuring at least one of the subset (S) of scheduling candidates and the report subset (R) during the communication connection.

48. Method according to any of claims 41 to 47, further comprising receiving an indication message comprising a subset (S) of scheduling candidates comprising preselected resource elements, determining the subset (S) of scheduling candidates from the indication message

49. Method according to any of claims 41 to 47, further comprising determining the subset (S) of scheduling candidates by executing a hand-shake procedure with a sender of the allocation message.

50. Method according to claim 49, further comprising using sequence numbers comprised in at least one of the received allocation message and quality information transmitted to the sender, wherein the sequence numbers are compared in order to identify a present subset (S) of scheduling candidates and a preceding subset (S') of scheduling candidates.

51. Method according to claim 50, further comprising reserving one sequence number for informing about a failure and requesting that the subset (S) of scheduling candidates is to be selected in a predetermined way,
wherein the subset (S) of scheduling candidates to be selected comprises one of a default set of resource elements (RE), a subset (S) of scheduling candidates previously communicated, or the total number (N) of resource elements (RE).

52. Method according to claim 49, further comprising using sequence numbers comprised in the received allocation message, wherein in case the sequence numbers are not incremented in comparison to a preceding allocation message, a preceding subset (S') of scheduling candidates is assumed to be valid.

53. Method according to claim 49, further comprising checking whether at least one of an acknowledgement and non-acknowledgement is received in response to a quality information transmitted to the sender for determining whether a present subset (S) of scheduling candidates or a preceding subset (S') of scheduling candidates is valid.

54. Method according to claim 53, further comprising re-transmitting the quality information or transmitting an updated quality information, in case a non-acknowledgement is received.

55. Method according to any of claims 41 to 54, further comprising determining the subset (S) of scheduling candidates on the basis of resource elements directly assigned to in the allocation message, wherein the subset (S) of scheduling candidates is allowed to comprise a predetermined number (k) of different resource elements being assigned, and updating the subset (S) of scheduling candidates on the basis of the resource elements directly assigned and the predetermined number (k).

56. Method according to any of claims 41 to 54, further comprising sending at least one of an acknowledgement and non-acknowledgement in response to the receipt of the allocation message.

57. Method according to claim 49, further comprising using sequence numbers comprised in the received allocation message, wherein the sequence numbers are incremented in response to an acknowledgement for a receipt of the allocation message.

58. Method according to any of claims 41 to 57, further comprising receiving a message comprising a report subset (R) of resource elements for triggering a quality measurement, in particular a channel quality measurement, sending quality measurement results for the resource elements comprised in the report subset (R), receiving a message comprising the subset (S) of scheduling candidates, determining the subset (S) of scheduling candidates on the basis of the received message, receiving the allocation message comprising a number (A) of resource elements contained in the subset (S) of scheduling candidates.

59. Method according to any of claims 41 to 57, further comprising receiving a message comprising the subset (S) of scheduling candidates for triggering a quality measurement, in particular a channel quality measurement, sending quality measurement results for the resource elements comprised in the subset (S) of scheduling candidates, receiving the allocation message comprising a number (A) of resource elements contained in the subset (S) of scheduling candidates.

60. Method according to any of claims 41 to 59, wherein the method is implemented in a peer entity, in particular a user equipment, of a communication network.

61. Apparatus comprising:
a processor configured to determine a subset (S) out of a total number (N) of resource elements (RE), said subset (S) indicating scheduling candidates of the resource elements selectable for a communication connection,
a receiver configured to receive an allocation message indicating an allocated set (A) of resource elements assigned to the communication connection,
wherein the allocation message comprises indices into the subset (S) of scheduling candidates.

62. Apparatus according to claim 61, wherein the processor is further configured to determine the subset (S) of scheduling candidates on the basis of a report subset (R) of resource elements, wherein the report subset (R) comprises those resource elements out of the total number (N) of resource elements for which a quality information, in particular a channel quality information (CQI), is available.

63. Apparatus according to claim 61 or 62, wherein a number (M) of resource elements of the subset (S) of scheduling candidates is equal to or less than the total number (N) of resource elements.

64. Apparatus according to any of claims 61 to 63, wherein the processor is further configured to process the allocation message comprising a number (A) of indices, wherein said number (A) of indices is equal to or less than a number (M) of the resource elements in the subset (S) of scheduling candidates.

65. Apparatus according to any of claims 61 to 64, further comprising a transmitter configured to report a result of a quality measurement, in particular a quality channel measurement, for resource elements indicated in the subset (S) of scheduling candidates upon receipt of a trigger signaling.

66. Apparatus according to any of claims 61 to 65, wherein the processor is further configured to re-configure the subset (S) of scheduling candidates during the communication connection.

67. Apparatus according to claim 62, wherein the processor is further configured to re-configure at least one of the subset (S) of scheduling candidates and the report subset (R) during the communication connection.

68. Apparatus according to any of claims 61 to 67, further comprising a receiver configured to receive an indication message comprising a subset (S) of scheduling candidates comprising preselected resource elements, wherein the processor is further configured to determine the subset (S) of scheduling candidates from the indication message.

69. Apparatus according to any of claims 61 to 67, wherein the processor is further configured to determine the subset (S) of scheduling candidates by executing a hand-shake procedure with a sender of the allocation message.

70. Apparatus according to claim 69, wherein the processor is further configured to use sequence numbers comprised in at least one of the received allocation message and quality information transmitted to the sender, wherein the sequence numbers are compared in order to identify a present subset (S) of scheduling candidates and a preceding subset (S') of scheduling candidates.

71. Apparatus according to claim 70, wherein the processor is further configured to reserve one sequence number for informing about a failure and requesting that the subset (S) of scheduling candidates is to be selected in a predetermined way, wherein the subset (S) of scheduling candidates to be selected comprises one of a default set of resource elements (RE), a subset (S) of scheduling candidates previously communicated, or the total number (N) of resource elements (RE).

72. Apparatus according to claim 69, wherein the processor is further configured to use sequence numbers comprised in the received allocation message, wherein in case the sequence numbers are not incremented in comparison to a preceding allocation message, a preceding subset (S') of scheduling candidates is assumed to be valid.

73. Apparatus according to claim 69, wherein the processor is further configured to check whether at least one of an acknowledgement and non-acknowledgement is received in response to a quality information transmitted to the sender for determining whether a present subset (S) of scheduling candidates or a preceding subset (S') of scheduling candidates is valid.

74. Apparatus according to claim 73, wherein the processor is further configured to instruct re-transmitting of the quality information or transmitting of an updated quality information, in case a non-acknowledgement is received.

75. Apparatus according to any of claims 61 to 74, wherein the processor is further configured to determine the subset (S) of scheduling candidates on the basis of resource elements directly assigned to in the allocation message,
wherein the subset (S) of scheduling candidates is allowed to comprise a predetermined number (k) of different resource elements being assigned, and to update the subset (S) of scheduling candidates on the basis of the resource elements directly assigned and the predetermined number (k).

76. Apparatus according to any of claims 61 to 74, further comprising a transmitter configured to send at least one of an acknowledgement and non-acknowledgement in response to the receipt of the allocation message.

77. Apparatus according to claim 69, wherein the processor is further configured to use sequence numbers comprised in the received allocation message, wherein the sequence numbers are incremented in response to an acknowledgement for a receipt of the allocation message.

78. Apparatus according to any of claims 61 to 77, further comprising a receiver configured to receive a message comprising a report subset (R) of resource elements for triggering a quality measurement, in particular a channel quality measurement, a transmitter configured to send quality measurement results for the resource elements comprised in the report subset (R), a receiver configured to receive a message comprising the subset (S) of scheduling candidates, wherein the processor is further configured to determine the subset (S) of scheduling candidates on the basis of the received message, a receiver configured to receive the allocation message comprising a number (A) of resource elements contained in the subset (S) of scheduling candidates.

79. Apparatus according to any of claims 61 to 77, further comprising a receiver configured to receive a message comprising the subset (S) of scheduling candidates for triggering a quality measurement, in particular a channel quality measurement, a transmitter configured to send quality measurement results for the resource elements comprised in the subset (S) of scheduling candidates, a receiver configured to receive the allocation message comprising a number (A) of resource elements contained in the subset (S) of scheduling candidates.

80. Apparatus according to any of claims 61 to 79, wherein the apparatus is comprised in a peer entity, in particular a user equipment, of a communication network.

81. A computer program product for a computer, comprising software code portions for performing the steps of any of claims 41 to 60 when said product is run on the computer.

82. A computer program product according to claim 81, wherein said computer program product comprises a computer-readable medium on which said software code portions are stored.

83. A computer program product according to claim 81, wherein said computer program product is directly loadable into the internal memory of the computer.

84. Apparatus comprising:
determining means for determining a subset (S) out of a total number (N) of resource elements (RE), said subset (S) indicating scheduling candidates of the resource elements selectable for a communication connection,
receiving means for receiving an allocation message indicating an allocated set (A) of resource elements assigned to the communication connection,
wherein the allocation message comprises indices into the subset (S) of scheduling candidates.
